# EUROPÄISCHE PATENTANMELDUNG

(11) **EP 0 663 787 A2**
(43) Veröffentlichungstag der Anmeldung: **19.07.1995**
(21) Anmeldenummer: 94119167.8
(22) Anmeldetag: 05.12.1994
(51) Int. Cl.: H04Q 11/00

(54) **Anordnung und Verfahren zur Durchschaltung von optischen Signalen unter Verwendung von ausgangsindividuellen Verzögerungsleitungen**

(30) Priorität: 20.12.1993 DE 4343512
(71) Anmelder: SIEMENS AKTIENGESELLSCHAFT, D-80333 München (DE)
(72) Erfinder: Osborne, Robert, Dr. Ing., D-81371 München (DE)

(57) **Zusammenfassung**

Eine Anordnung zur Durchschaltung von im Zuge eines asynchronen Übertragungsverfahrens (Asynchronous Transfer Mode) als optisches Signal auf Eingangswellenleitern herangeführten Datenblöcken (Nachrichtenzellen) fester Länge weist eingangswellenleitungsindividuelle Wellenlängenumsetzeinrichtungen auf. Ein optische Signale durchschaltender Raumschalter (cross bar) ist mit seinen Eingängen mit den Ausgängen der Wellenlängenumsetzeinrichtungen und mit seinen Ausgängen mit den Eingängen von ausgangswellenleiterindividuellen, wellenlängenselektiven Verzögerungsleitungen verbunden. Eine Zielinformation, die in einem auf einem Eingangswellenleiter ankommenden Datenblock mitgeführt ist, wird in einer Steuerungseinrichtung ausgewertet und veranlaßt eine Einstellung der zugehörigen Wellenlängenumsetzeinrichtung und des Raumschalters.

## Beschreibung

Daten und somit auch Datenblöcke fester Länge, wie z.B. nach dem ATM(Asynchronous-Transfer-Mode)-Verfahren übertragene Nachrichtenzellen, werden aufgrund der mit der Übertragung als optisches Signal verbundenen Vorteile zunehmend über optische Signale führende Wellenleiter übertragen.Neuere Entwicklungen haben auch in den Knotenpunkten der Übertragungsstrecken eine Durchschaltung von Daten unter Vermeidung einer Umsetzung in ein elektrisches Signal zum Ziel.

Die Erfindung betrifft eine Anordnung zur Durchschaltung von als optische Signale auf Eingangswellenleitern übertragenen Datenblöcken fester Länge auf Ausgangswellenleiter, bei der
- die Eingangswellenleiter jeweils mit einer Wellenlängenumsetzeinrichtung verbunden sind,
- die Wellenlängenumsetzeinrichtungen nach Maßgabe einer in einem auf einer Eingangsleitung ankommenden Datenblock mitgeführten Zielinformation einstellbar sind,
- die Eingangswellenleiter über jeweils ein Signal einer gegebenen Wellenlänge transportierende Verbindungswege mit den Ausgangswellenleitern verbindbar sind,
- jedem Ausgangswellenleiter eine Verzögerungsleitung zugeordnet ist,die ein optisches Signal nach Maßgabe seiner Wellenlänge in einem Mehrfachen(i=0,1,2,...)der Übertragungsdauer eines Datenblocks entsprechenden Stufen verzögert.

Aus Photonic Switching II, Proceedings of the International Topical Meeting, Kobe, Japan, 12. bis 14. April 1990, Springer Verlag, Seiten 296 bis 299, "Photonic ATM Switching Network" von S. Kuro Janagi, T. Shimoe und K. Morakami ist eine Anordnung zur Durchschaltung von als optische Signale auf Eingangswellenleitern übertragenen Datenblöcken fester Länge auf Ausgangswellenleiter bekannt, bei der ein auf einer Eingangsleitung ankommender Datenblock in einer eingangsleitungsindividuellen Wellenlängenumsetzeinrichtung in eine Wellenlänge umgesetzt wird, nach deren Maßgabe der Datenblock zu dem betreffenden Ausgang durchgeschaltet wird. Bei dieser Anordnung sind ausgangsindividuelle Verzögerungseinrichtungen vorgesehen. In einer Verzögerungseinrichtung wird ein optisches Signal unter Verwendung eines Wellenlängen-Umsetzungs-Lasers in eine der erforderlichen Verzögerung entsprechenden Wellenlänge umgesetzt. Dieses optische Signal wird über eine passive optische Verteileinrichtung (Splitter), einer Mehrzahl von Filtern mit untereinander unterschiedlichen, festgelegten Wellenlängen-Durchlaßbereichen zugeführt. Eine Verzögerungskette ist mit einer der Mehrzahl von Filtern gleichenden Anzahl von Kettengliedern gebildet. Die Kettenglieder sind jeweils wiederum mit einer Verzögerungsleitung und einer Einkoppeleinrichtung gebildet. Die Filter sind ausgangsseitig jeweils mit einer Einkoppeleinrichtung verbunden. Das optische Signal durchläuft nach Maßgabe der jeweiligen Wellenlänge eine jeweilige Anzahl von Kettengliedern. Über die Wellenlängen des optischen Signals sind also verschiedene Stufen von Verzögerungsdauern wählbar.

Bei dieser Anordnung macht es sich nachteilig bemerkbar, daß zum einen im Durchschalteweg für ein Signal zwei Wellenlängenumsetzeinrichtungen erforderlich sind und zum anderen in den Verzögerungseinrichtungen durch die Aufsplitterung des Signals und die Mehrzahl zu durchlaufender Einfügestellen ein relativ hoher Intensitätsverlust eintritt, wobei optische Signale mit einer höheren Verzögerungsdauer eine entsprechend erhöhte Anzahl von Einfügestellen zu durchlaufen haben und damit einen entsprechend erhöhten Intensitätsverlust erfahren.

Der Erfindung liegt das Problem zugrunde, eine Anordnung zur Durchschaltung von als optische Signale auf Eingangswellenleitern übertragenen Datenblöcken fester Länge auf Ausgangswellenleiter anzugeben, die bei einer Durchschaltung eines Datenblockes eine nur einmalige Umsetzung der Wellenlänge erfordert, und die des weiteren einen reduzierten Bereich der Intensitäten der optischen Signale an den Ausgängen der Anordnung aufweist.

Das Problem wird dadurch gelost, daß bei der eingangs umrissenen Anordnung
- die Ausgänge der Wellenlängenumsetzeinrichtungen mit den Eingängen eines optische Signale durchschaltenden Raumkopplers (CB) verbunden sind
- die Ausgänge des Raumkopplers jeweils über eine wellenlängenselektive Verzögerungsleitung, die mit den Verzögerungsstufen entsprechend beabstandeten Reflexionsschichten versehen ist, mit den Ausgangswellenleitern verbunden sind
- ein Eingang des Raumkopplers nach Maßgabe der Zielinformation mit dem gewünschten Ausgang des Raumkopplers verbindbar ist.

Die anmeldungsgemäße Anordnung bringt den Vorteil eines geringen Aufwandes für nur eine im Durchschalteweg eines Datenblocks vorzusehende Wellenlängenumsetzeinrichtung mit sich, wobei für die Weiterverarbeitung der Signale an den Ausgängen der Anordnung jeweils Einrichtungen einsetzbar sind,die lediglich ihnen eingangsseitig zugeführte Signale mit einem eingeschränkten Dynamikbereich verarbeiten können.

Weitere Weiterbildungen betreffen Verfahren zum Betrieb der Anordnung.

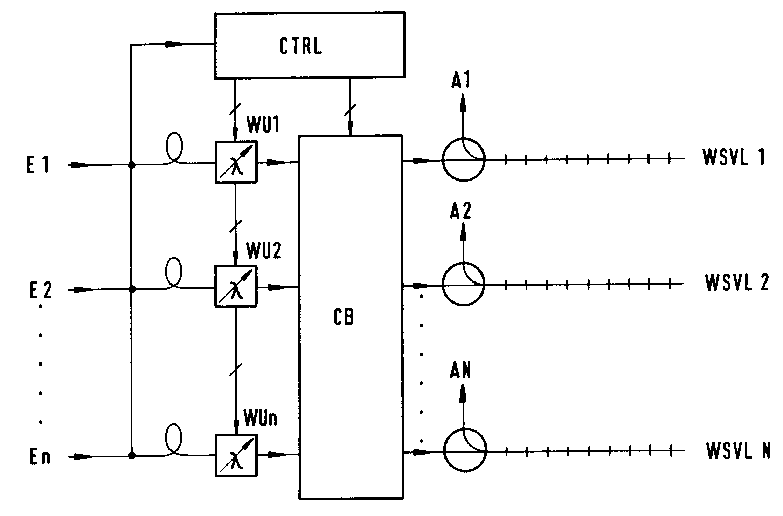

Die Erfindung wird nun als Ausführungsbeispiel in einem zum Verständnis der Erfindung erforderlichen Umfang anhand einer Figur näher beschrieben. Die Figur zeigt eine schematische Darstellung einer Anordnung zur Durchschaltung von auf eine Mehrzahl von Eingangswellenleitern E1..En optisch übertragenen Datenblöcken fester Länge auf eine Mehrzahl von Ausgangswellenleitern A1..AN. Die Eingangswellenleiter, die durch optische Signale weiterleitende Glasfaserleitungen gegeben sein mögen, sind über zugehörige Wellenlängenumsetzeinrichtungen WU1..WUn mit den Eingängen eines optische Signale durchschaltenden Raumkopplers ("cross bar") CB verbunden, der durch einen herkömmlichen InP-Verstärkerschalter gegeben sein kann. Die Wellenlängenumsetzeinrichtungen können beispielsweise durch aus Electronics Letters, vol. 23, pages 1088..89, 1987, "Tuneable Optical Conversion Using a Multi Electrode Distributed Feedback Laser Diode with a Saturable Absorber" oder aus Proceedings Fourth Photonic Switching Topical Meeting, Salt Lake City, March 1991, Paper WA2 bekannte, stromgesteuerte DFB (Distributed Feed-Back) Laserdioden gegeben sein. Diese Laserdioden vermögen - unter der Voraussetzung eines eingangsseitig zugeführten optischen Signals mit einer vorgegebenen Mindestintensität - in Abhängigkeit von der von einer steuerbaren Stromquelle zugeführten Stärke des steuernden Stromes am Ausgang ein optisches Signal mit einer aus einer Mehrzahl von möglichen Wellenlängen abzugeben. Die Ausgänge des Raumkopplers sind jeweils mit dem Eingang einer wellenlängenselektiven Verzögerungsleitung WSVL1..WSVLN verbunden. Die Verzögerungsleitungen können beispielsweise durch aus Electronics Letters, 7th January 1993, vol. 29, no. 1, pages 28,29 "High Reflectivity and Narrow Bandwidth Fiber Gratings Written by a Single Eximer Pulse" oder aus Electronics Letters, 18th March 1993, vol. 29, no. 6, pages 566..568" Production of In-Fiber Gratings Using a Diffractive Optical Element" bekannte Verzögerungsleitungen gegeben sein. In die Verzögerungsleitungen sind wellenlängenselektive Reflektionsschichten mit jeweils unterschiedlicher charakteristischer Wellenlänge eingebracht. Die wellenlängenselektiven Reflektionsschichten vermögen jeweils ein optisches Signal mit einer ihnen zugeordneten Wellenlänge zu reflektieren. Der Abstand zweier benachbarter Reflektionsschichten ist derart bemessen, daß der Laufzeitunterschied eines optischen Signales dem zeitlichen Abstand des Auftretens zweier aufeinanderfolgender Datenblöcke bzw. der gesamten Übertragungsdauer eines Datenblockes bei der gegebenen Datenübertragungsrate entspricht. Die Ausgänge der Verzögerungsleitungen sind mit den Ausgangswellenleitern der Anordnung verbunden. Der Anordnung werden auf den Eingangswellenleitern Datenblöcke fester Länge zugeführt. Die Datenblöcke mögen durch nach einem asynchronen Übertragungsverfahren, beispielsweise nach dem ATM (Asynchronous Transfer Mode), übertragene Nachrichtenzellen gegeben sein. Die Nachrichtenzellen weisen jeweils einen Nutzdatenteil mit beispielsweise 48 byte Länge und einen diesem vorangestellten Nachrichtenzellenkopf mit beispielsweise 5 byte Länge auf. Der Nachrichtenzellenkopf umfaßt eine Zielinformation(Virtual Path Identifier/Virtual Channel Identifier). Die Zielinformationen von auf den Eingangswellenleitern ankommenden Datenblöcken werden einer Steuerungseinrichtung CTRL zugeführt. In der Steuerungseinrichtung wird für jeden Datenblock in an sich bekannter Weise - beispielsweise unter Verwendung einer Umwertetabelle - der gewünschte Ausgangswellenleiter ermittelt. In der Steuerungseinrichtung ist für jeden Ausgangswellenleiter eine Tabelle eingerichtet. Eine Tabelle kann beispielsweise durch einen FIFO-Speicher gegeben sein, bei dem mit jedem auf den zugehörigen Ausgangswellenleiter durchzuschaltenden Datenblock ein Speicherplatz besetzt wird und bei dem nach jeder Übertragungsdauer eines Datenblocks der Speicherplatz mit dem jeweils ältesten Eintrag gelöscht wird. In der Steuerungseinrichtung wird für jeden Datenblock eine Verzögerungsstufe ermittelt, die ein gleichzeitiges Auftreten mit einem anderen, auf denselben Ausgangswellenleiter weiterzuleitenden Datenblock vermeidet. Sind also beispielsweise drei andere Datenblöcke - diese Datenblöcke mögen sich bereits in der dem gewünschten Ausgangswellenleiter zugehörigen Verzögerungsleitung befinden - vorrangig gegenüber dem betrachteten Datenblock auf denselben Ausgangswellenleiter weiterzuleiten, so muß der betrachtete Datenblock um mindestens vier, jeweils der Übertragungsdauer eines Datenblocks entsprechenden Stufen verzögert werden. Die Steuerungseinrichtung ermittelt ein Steuersignal, das der betreffenden Wellenlängenumsetzeinrichtung zugeführt wird. Die Wellenlängenumsetzeinrichtung leitet den Datenblock nach Maßgabe des Steuersignals mit der Wellenlänge weiter, die - wie weiter unten noch näher beschrieben werden wird - in der Verzögerungsleitung die ermittelte Verzögerung bewirkt. Die Steuerungseinrichtung ermittelt für den betrachteten Datenblock ein weiteres Steuersignal, das dem Raumkoppler zugeführt wird. Das weitere Steuersignal veranlaßt eine Verbindung des mit der betreffenden Eingangsleitung verbundenen Eingangs des optischen Raumkopplers mit dem mit dem gewünschten Ausgangswellenleiter verbundenen Ausgang des Raumkopplers. Von dem Ausgang des Raumkopplers wird der Datenblock der zugehörigen Verzögerungsleitung zugeführt. In der Verzögerungsleitung wird der Datenblock an derjenigen Reflektionsschicht reflektiert, deren spezifische Wellenlänge der Wellenlänge des Datenblocks gleicht. Der reflektierte Datenblock wird beispielsweise über eine Verzweigungseinrichtung auf den gewünschten Ausgangswellenleiter weitergeleitet.

In die Ausgangswellenleiter kann beispielsweise eine Wellenlängenumsetzeinrichtung, die durch einen optischen Inverter gegeben sein möge, eingefügt sein. Als optische Inverter können beispielsweise solche zum Einsatz kommen, wie sie in B. Glans, J.Wiesenfeld "Optical Wavelength Shifter for Wavelength-Division-Multiplexed Networks", Optics and Photonic News, Dec. 1992, Seite 31 bekannt sind. Die optischen Inverter bewirken jeweils zum einen eine Umsetzung sämtlicher Datenblöcke mit unterschiedlichen Wellenlängen in Datenblöcke mit einer einzigen Wellenlänge und zum anderen einen untereinander gleich hohen Intensitätspegel der weitergeleiteten Datenblöcke.

Für die Ermittlung und Einstellung der erforderlichen Wellenlänge für die Weiterleitung eines ankommenden Datenblocks ist eine gewisse Zeitspanne erforderlich. Es ist eine im Bereich fachmännischen Könnens liegende Maßnahme, zwischen den Stellen, an denen die Zielinformationen von den Eingangsleitungen abgegriffen wird und den Eingängen der Wellenlängenumsetzeinrichtungen in der Zeichnung nicht dargestellte Verzögerungsleitungen einzufügen, die eine ausreichende Verzögerungsdauer für die Einstellung der Wellenlängenumsetzeinrichtungen bis zum Eintreffen der Datenblöcke an den Eingängen der Wellenlängenumsetzeinrichtungen sicherstellen.

## Patentansprüche

1. Anordnung zur Durchschaltung von als optische Signale auf Eingangswellenleitern (E1..En) übertragenen Datenblöcken fester Länge auf Ausgangswellenleiter (A1..AN) bei der
- die Eingangswellenleiter jeweils mit einer Wellenlängenumsetzeinrichtung (WU1..WUn) verbunden sind,
- die Wellenlängenumsetzeinrichtungen nach Maßgabe einer in einem auf einer Eingangsleitung ankommenden Datenblock mitgeführten Zielinformation einstellbar sind,
- die Eingangswellenleiter über jeweils ein Signal einer gegebenen Wellenlänge transportierende Verbindungswege mit den Ausgangswellenleitern verbindbar sind,
- jedem Ausgangswellenleiter eine Verzögerungsleitung zugeordnet ist,die ein optisches Signal nach Maßgabe seiner Wellenlänge in einem Mehrfachen(i=0,1,2,...)der Übertragungsdauer eines Datenblocks entsprechenden Stufen verzögert
**dadurch gekennzeichnet,** daß
- die Ausgänge der Wellenlängenumsetzeinrichtungen mit den Eingängen eines optische Signale durchschaltenden Raumkopplers (CB) verbunden sind
- die Ausgänge des Raumkopplers jeweils über eine wellenlängenselektive Verzögerungsleitung, die mit den Verzögerungsstufen entsprechend beabstandeten Reflexionsschichten versehen ist, mit den Ausgangswellenleitern verbunden sind
- ein Eingang des Raumkopplers nach Maßgabe der Zielinformation mit dem gewünschten Ausgang des Raumkopplers verbindbar ist.

2. Anordnung nach Anspruch 1,
**dadurch gekennzeichnet,** daß
die Eingangswellenleiter über eine die Zielinformationen in entsprechende Steuersignale umsetzende Steuereinrichtung mit den Wellenlängenumsetzeinrichtungen und dem Raumschalter verbunden sind.

3. Verfahren zum Betrieb einer Anordnung nach einem der Ansprüche 1 oder 2,
**dadurch gekennzeichnet,** daß
- eine Zielinformation, die in einem auf einem Eingangwellenleiter ankommenden Datenblock mitgeführt ist, der Steuerungseinrichtung zugeführt wird,
- von der Steuerungseinrichtung der dem Eingangswellenleiter zugehörigen Wellenlängenumsetzeinrichtung ein erstes Steuersignal zugeführt wird, das eine Weiterleitung des ankommenden Datenblocks mit einer Wellenlänge nach Maßgabe des Steuersignals bewirkt,
- die Steuerungseinrichtung dem Raumkoppler ein zweites Steuersignal zuführt, nach dessen Maßgabe der betreffende Eingang mit dem gewünschten Ausgang verbunden wird,
- der ankommende Datenblock über den Raumkoppler der dem gewünschten Ausgangswellenleiter zugehörigen Verzögerungsleitung zugeführt wird, dort nach Maßgabe seiner Wellenlänge um ein Mehrfaches einer Übertragungsdauer eines Datenblocks verzögert und auf den genannten Ausgangswellenleiter weitergeleitet wird.

4. Verfahren nach Anspruch 3,
**dadurch gekennzeichnet,**
daß der Datenblock um eine Anzahl von Stufen verzögert wird, die ein gleichzeitiges Auftreten mit einem anderen, auf denselben Ausgangswellenleiter weiterzuleitenden Datenblock vermeidet.

5. Verfahren nach Anspruch 4,
**dadurch gekennzeichnet,**
daß der Datenblock um eine geringstmögliche Anzahl von Stufen verzögert wird

6. Anordnung bzw. Verfahren zum Betrieb einer Anordnung nach einem der vorstehenden Ansprüche,
**dadurch gekennzeichnet,**
daß die Datenblöcke durch nach einem asynchronen Übertragungsverfahren übertragene Nachrichtenzellen gegeben sind.
